# EUROPEAN PATENT APPLICATION

(11) **EP 4 715 761 A1**
(43) Date of publication of application: **25.03.2026**
(21) Application number: 25203555.5
(22) Date of filing: 22.09.2025
(51) Int. Cl.: G06V 20/52

(54) **COMBINED OBJECT DETECTION AND BEHAVIOR DETECTION SYSTEM**

(30) Priority: 20.09.2024 US 202463697424 P; 19.09.2025 US 202519334214
(71) Applicant: Tyco Fire & Security GmbH, 8212 Neuhausen am Rheinfall (CH)
(72) Inventor: Paripally, Gopal, 8212 Neuhausen am Rheinfall (CH); David, Monahan, 8212 Neuhausen am Rheinfall (CH)
(74) Representative: Meissner Bolte Nürnberg

(57) **Abstract**

Aspects of the present disclosure provide a system, apparatus, and method for bag identification. For example, the system may obtain a plurality of images from one or more image capturing devices within a geographic area. The system may further identify a bag within the plurality of images. The system may further determine whether the plurality of images includes a person associated with the bag and within a distance of the bag. The system may further identify a period of time the person has not been within the distance of the bag. The system may further determine whether the period of time the person has not been within the distance of the bag satisfies an abandoned bag threshold value. The system may further generate an indication representing an abandoned bag state.

## Description

### CROSS-REFERENCE TO RELATED APPLICATION(S)

The application claims the benefit of U.S. Non-Provisional Patent Application No. 19/334,214, entitled "COMBINED OBJECT DETECTION AND BEHAVIOR DETECTION SYSTEM", which claims the benefit of U.S. Provisional Patent Application No. 63/697424, entitled "COMBINED OBJECT DETECTION AND BEHAVIOR DETECTION SYSTEM" and filed on September 20, 2024, which is expressly incorporated by reference herein in its entirety.

### BACKGROUND

The present disclosure relates to vision systems, and more specifically to object detection of attributes of a person or a group of people from image data combined with associated behavior detection. As vision systems become less expensive and are installed more widely, there exists a need for further improvements in object and behavior detection.

### SUMMARY

The following presents a simplified summary of one or more aspects in order to provide a basic understanding of such aspects. This summary is not an extensive overview of all contemplated aspects and is intended to neither identify key or critical elements of all aspects nor delineate the scope of any or all aspects. Its sole purpose is to present some concepts of one or more aspects in a simplified form as a prelude to the more detailed description that is presented later.

An example aspect includes a method of bag identification, which may include obtaining a plurality of images from one or more image capturing devices within a geographic area. The method may include identifying a bag within the plurality of images. The method may include determining whether the plurality of images includes a person associated with the bag and within a distance of the bag. The method may include, in accordance with determining that the plurality of images does not include the person associated with the bag or the person not within the distance of the bag. The method may include identifying a period of time the person has not been within the distance of the bag, determining whether the period of time the person has not been within the distance of the bag satisfies an abandoned bag threshold value. The method may include, in accordance with determining that the period of time the person has not been within the distance of the bag satisfies the abandoned bag threshold value, generating an indication representing an abandoned bag state.

Another example aspect includes an apparatus for combining object detection, comprising one or more memories and one or more processors coupled with one or more memories, individually or in any combination, and configured to obtain a plurality of images from one or more image capturing devices within a geographic area. The one or more processors may be further configured to identify a bag within the plurality of images. The one or more processors may be further configured to determine whether the plurality of images includes a person associated with the bag and within a distance of the bag. The one or more processors may be further configured to identify a period of time the person has not been within the distance of the bag in accordance with a determination that the plurality of images does not include the person associated with the bag or the person not within the distance of the bag. The one or more processors may be further configured to determine whether the period of time the person has not been within the distance of the bag satisfies an abandoned bag threshold value. The one or more processors may be further configured to generate an indication representing an abandoned bag state in accordance with a determination that the period of time the person has not been within the distance of the bag satisfies the abandoned bag threshold value.

Another example aspect includes an apparatus for combining object detection and behavior detection, comprising means for obtaining a plurality of images from one or more image capturing devices within a geographic area. The apparatus may include means for identifying a bag within the plurality of images. The apparatus may include means for determining whether the plurality of images includes a person associated with the bag and within a distance of the bag. The apparatus may include means for identifying a period of time the person has not been within the distance of the bag in accordance with determining that the plurality of images does not include the person associated with the bag or the person not within the distance of the bag. The apparatus may include means for determining whether the period of time the person has not been within the distance of the bag satisfies an abandoned bag threshold value. The apparatus may include means for generating an indication representing an abandoned bag state in accordance with determining that the period of time the person has not been within the distance of the bag satisfies the abandoned bag threshold value.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
FIG. 1 is a schematic block diagram illustrating an example video surveillance and object detection-based system, in accordance with aspects described herein.
FIG. 2 is a block diagram illustrating an example process for object detection via CVA and a large language model (LLM), in accordance with aspects described herein.
FIG. 3 is a diagram illustrating techniques for abandoned object detection, in accordance with aspects described herein.
FIG. 4 is a block diagram illustrating an example case report for an abandoned bag, in accordance with aspects described herein.
FIG. 5 is a block diagram of an example of a computer device having components configured to perform a method of abandoned bag detection.
FIG. 6 is a flowchart of an example of a method of abandoned bag detection.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known components may be shown in block diagram form in order to avoid obscuring such concepts.

Aspects of the disclosure are directed to techniques for object detection based on information collected from image data (e.g., digital images and/or videos) and other information. Specifically, bags used by individuals are present in many locations and businesses. Bags may be used to carry goods from location to another, and come in various shapes and sizes. For example, bags in the form of luggage may be used as part of traveling in an airport, train station, or via sea. However, bags may also pose a security risk as any individual may carry one and conceal the contents. Moreover, unattended bags may pose an even greater risk if the contents are nefarious. As such, object detection, notably of bags, and in more particular, detection of unattended bags may be beneficial in many environments, i.e., airports.

A security member of an area may use a number of surveillance cameras to monitor the area. Image data generated by the cameras may be used as input to an object detection or object recognition device. In certain aspects, the object detection device may be configured to recognize individuals (such as but not limited to travelers) within the image data, and may also recognize demographic attributes associated with those customers. In one implementation, but not limited hereto, the area may be a gate area and the security member of the area may be a member of an airport security team or government agency. In some examples, the object detection device includes a computer vision analytics (CVA) functionality. In certain aspects, CVA relates to a model of artificial intelligence (AI) configured to interpret and understand visual content (e.g., image data).

For example, the CVA may be trained to analyze an image (e.g., object and action recognition/detection) and generate a textual and/or graphical description of the image based on the analysis. Such image analysis may involve computing embeddings, or mathematical representations, for both textual descriptions and image data. These embeddings are then compared using vector distance computation. Vector distance computation, as used herein, may include any suitable vector distance measurement, including: Euclidian distance (e.g., L2 norm), Manhattan distance (e.g., L1 norm), Ln or L infinity norm, Minkowski distance, Cosine distance/similarity, Hamming distance, etc. If a distance between the embeddings satisfies a threshold condition, then the CVA may determine that the image includes the object or action described by the text. In some examples, the CVA may be configured to acquire, process, analyze, and generate information (e.g., textual, tabular, graphic, etc.) about the content of digital images or videos. Thus, in some examples, the CVA may receive image data, identify objects detected in image data via vector distance computation, and output a CVA-based report that includes information about the identified objects.

In some examples, the object detection device may receive, as input, internal data and external data that the CVA may analyze in addition to the image data. For example, internal data may include information associated with the area from which image data is collected. In one implementation, but not limited hereto, the internal data and external data may be behavioral data associated with objects or individuals detected in the image data. For example, the internal data may include information about the bags (e.g., size, color, etc.) in a particular travel area. In another example, external data may include information associated with aspects outside of the area, such as weather, time, cultural trends, economic trends, etc. As a result, the CVA may generate a report that includes information generated based on image data and a relationship between that information and one or more of the internal data and the external data. For example, but not limited hereto, the report may include information about travelers (e.g., height and weight) collected from a particular geographic area within the time span of a time window (e.g., a day or a month, or during a season).

Accordingly, in one implementation, but not limited hereto, systems and methods for identifying abandoned bags within certain geographic areas such as airports and places of travel may include obtaining a plurality of images from one or more image capturing devices within a geographic area, identifying a bag within the plurality of images, determining whether the plurality of images includes a person associated with the bag and within a distance of the bag, in accordance with determining that the plurality of images does not include the person associated with the bag or the person not within the distance of the bag, identifying a period of time the person has not been within the distance of the bag, determining whether the period of time the person has not been within the distance of the bag satisfies an abandoned bag threshold value, and in accordance with determining that the period of time the person has not been within the distance of the bag satisfies the abandoned bag threshold value, generating an indication representing an abandoned bag state.

Thus, in certain aspects, the object detection device may output a report. i.e., CVA report, to a security report generating device. In some examples, the report generating device may receive: (i) the CVA-based report and (ii) a user-configurable context as inputs, and output a second report based on both the CVA-based report and the user-configurable context. Here, the context may provide a basis by which the CVA-based report is filtered (e.g., the basis for which the report generating device excludes or includes information in the second report). In some examples, the report generating device may include a text-based classification model (e.g., a large language model (LLMs) or any other suitable model) configured to output the second report based on the CVA-based report and the context. As used herein, the LLM model may include ChatGPT, Gemini, Gemma, Llama, and/or any other suitable LLM model.

Text-based classification models are a type of machine learning model typically used for processing and generating text. For example, a text-based classification model may use natural language processing (NLP) to categorize, label, or annotate documents or other pieces of text based on their textual content. This can include identifying the sentiment of a piece of text, classifying emails as spam or not spam, or tagging news articles by topic.

Here, the second report is relatively more user-friendly than the CVA-based report, because the LLM may be configured to narrow the focus of the report based on user-configured context. In some examples, the LLM may be configured to detect patterns or trends in the CVA-based report and re-produce those patterns or trends in the second report. In certain aspects, the second report may be transmitted or otherwise provided to a user device (e.g., a cell phone, tablet, computer, printer, or other suitable electronic device).

Thus, in certain aspects, the text-based classification model may be used in conjunction with CVA to generate a user-friendly report based on image data collected from one or more cameras. Accordingly, a retailer may use a surveillance system and a combination of image AI and LLM AI models to collect data about customer behavior and filter the data into user-friendly reports. Turning now to the figures, example aspects are depicted with reference to one or more modules or components described herein, where modules or components in dashed lines may be optional.

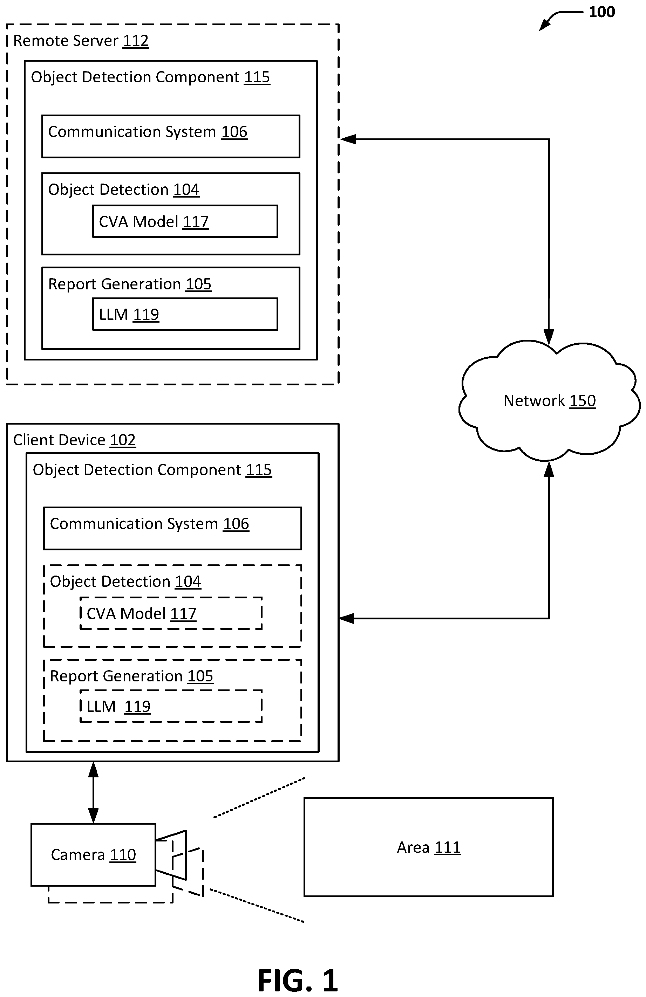

**FIG. 1** is a schematic block diagram illustrating an example system 100. The system 100 includes one or more cameras 110, a client device 102, and a remote server 112. The one or more cameras 110 may include, but are not limited to: image sensors, video and/or still-picture cameras, thermal sensors, motion sensors, and the like. The cameras 110 may be positioned so as to have a field of view in one or more overlapping and/or different parts of an indoor/outdoor area 111 (e.g., a retail store, venue, building, and the like). The client device 102 may be configured to receive image data (e.g., video frames) from the one or more cameras 110.

The client device 102 may form a local part of the system. That is, the client device 102 may be communicatively coupled to the one or more cameras 110 via a wired and/or wireless interface and may be in the same area or region as the cameras 110. For example, the client device 102 may be located in the same retail establishment as the cameras, and the client device 102 may be implemented as a server or any other suitable computing device and may include a computer-readable medium configured to store image data captured by the one or more cameras 110 and software instructions or code for executing the functions described herein. The computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, flash memory, combinations of the aforementioned types of computer-readable media, or any other medium that can be used to store computer executable code in the form of instructions or data structures that can be accessed by a computer.

The client device 102 may include graphics and/or display processing capabilities configured to enable processing of image data received from the one or more cameras 110. For example, the client device 102 may include a video/image encoder function configured to process raw video/image data received from the one or more cameras 110 and transform the raw data into a multi-dimensional vector representing features and patterns of the video/image data. In some examples, the client device may be configured to process the image data via a series of convolutional layers (e.g., in the case of a convolutional neural network (CNN)), where patterns of varying complexity are recognized in each layer of the image data. The vector may be used as an input of the object detection module 104 for object detection and/or classification.

The client device 102 may include a object detection component 115 configured to perform object detection based on information collected from image data (e.g., digital images and/or videos) and other information. The object detection component 113 includes a communication system 106, an object detection module 104, and a report generation module 105. The communication system 106 includes one or more wired or wireless transmitters, receivers, and/or transceivers, buses, and/or interfaces for communicating data internally with the device and/or with external devices (such as cameras 110) or networks (such as network 150).

The object detection module 104 may be configured to detect and classify an object or action shown in image data received from the one or more cameras 110. In some examples, the object detection module 104 may include one or more computer vision analytics (CVA) artificial intelligence (AI) models 117, which may further include a relative cosine similarity classifier or any other suitable classifier (e.g., Manhattan distance (L1 norm), Euclidean distance (L2 norm), etc.) to classify an image by comparing multiple classes and/or categories of text to an image, and classifying the image or an object detected in the image based on closest cosine similarity relative to the other classes of text.

In some examples, the object detection module 104 may be configured to detect people captured in image data generate by the one or more cameras 110. In one example, the object detection module 104 may be detect people in the image data, and determine one or more characteristics or demographics (e.g., age group, perceived gender, height, weight, and/or any other personal characteristics) associated with those people. In some examples, one or more CVA AI models 117 performs the foregoing object detection/recognition and classification.

The CVA model 117 may be configured to process raw video/image data received from the one or more cameras 110 and transform the raw data into one or more multi-dimensional vectors representing features and patterns of the image data. In some examples, the CVA model 117 is configured to process the image data via a series of convolutional layers (e.g., in the case of a convolutional neural network (CNN)), where the CVA model 117 is configured to recognize patterns of varying complexity in each layer of the image data. The vector may be used by the CVA model 117 for object detection and/or classification.

The CVA model 117 may further be configured to detect and classify an object, i.e., bag, suitcase, handbag, backpack, tote bag, fanny pack, satchel, briefcase, wallet, and/or luggage, or action shown in image data received from the one or more cameras 110. In some examples, the CVA model 117 may include a relative vector distance classifier. As such, the CVA model 117 may be configured to classify an image by comparing multiple classes of text (e.g., user-configurable text) to an image, and select the text associated with a text vector that has the smallest vector distance relative to text vectors associated with other classes and/or categories of text.

In some examples, the CVA model 117 may generate a report (e.g., textual, tabular, and/or visual) that includes the one or more characteristics or demographics of the people detected in the image data, and any other suitable information collected from the image data by the object detection module 104. For instance, the report may correspond to a case report and include a case summary, owner identification, threat analysis, surveillance review, remediation recommendations, and follow up actions. For example, the CVA-based report may include tabular data (e.g., comma-separated values (CSV) format or any other suitable format), textual data, and/or visual (e.g., extensible markup language (XML) or other suitable format). In some examples, the CVA model 117 may generate a report that further includes external data and one or more relationships between the external data and the data collected from the image data. For example, the object detection module 104 may receive, collect, and/or store, from the network 150, external data such as time (e.g., current date, time of day, month, year, etc.), and any other suitable information. Alternatively, or in addition, the external data may include information indicative of trends from other stores. For example, a CVA model 117 used by an airport located in a first region may receive external data 308 that includes information indicative of an airport located in a second region.

In some examples, the report generation module 105 may include an LLM AI model 119 configured to filter the data of the CVA-based report and generate the report based on the filtered data. The LLM AI model 119 may also be configured to generate the report based further on user input (e.g., context). As discussed above, the CVA-based report may include information related to case summary, owner identification, threat analysis, surveillance review, remediation recommendations, and follow up actions.

In certain aspects, the client device 102 may not be configured with one or more components of the combined object detection component 115. For instance, the client device 102 may only gather and transfer the image data, and hence may not include the object detection module 104 or the report generation module 105. For example, the client device 102 may be configured to transmit image data collected from the one or more cameras 110 to the remote server 112 which includes one or more of an object detection module 104 and a report generation module 105 of the combined object and behavior detection component 115. In this example, the remote server 112 may receive, via the network 150, image data from the one or more cameras 110. The object detection module 104 may detect and classify objects and/or actions shown in image data and generate a CVA report. The report generation module 105 may then generate a second report based on the CVA report. The remote server 112 may then communicate the second report to the client device 102 via a communication system 106 and the network 150.

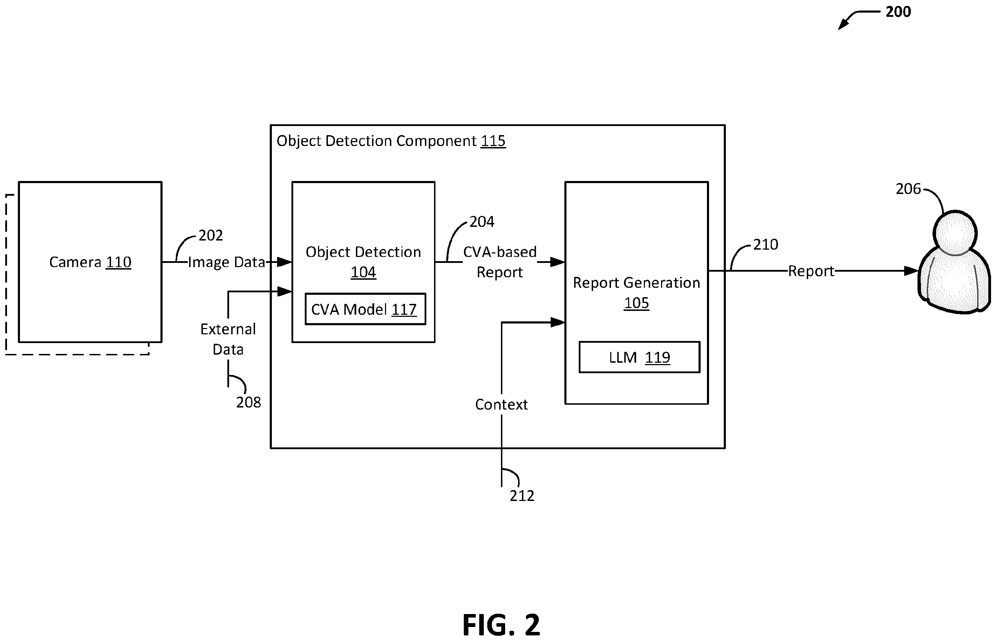

**FIG. 2** is a block diagram illustrating an example process 200 for object detection and report generation by the object detection component 115 using the CVA model 117 and the LLM AI model 119. This example process 200 may include identifying a bag or luggage in a geographic area and determine whether an individual associated with the bag or luggage is present according to a threshold distance. In some aspects, a bag or luggage may correspond to at least one of a suitcase, handbag, backpack, tote bag, fanny pack, satchel, briefcase, wallet, or any other type of object that is configured to store smaller objects therein. If the bag is determined to be unattended for a period of time, the object detection component 115 may be configured to alert security personnel automatically. Further, the object detection component 115 may be configured to record information inputted by a security individual reviewing the image data or being presented with interpreted data by the LLM AI model 119, such as a case summary, bag owner identification, threat analysis, surveillance review, remediation recommendations, and follow up actions.

In certain aspects, the CVA model 117 may be configured to tailor the data it provides in the CVA-based report 304 to improve the performance of the LLM AI model 119 regarding reading and interpreting the input data, as well as generating and outputting relevant data in the report 310, which may be similar to the CVA-based report 304. In an example of tabular data, the CVA model 117 may limit the size of tables that are included in the CVA-based report 304. Accordingly, the CVA model 117 may be configured to generate and output a CVA-based report 204 using certain rules that improve the ability of the LLM AI model 119 to parse the data provided in the CVA-based report 204.

The report 210 may provide the relevant information in a textual, tabular, and/or graphical format, which may be a different format than the CVA-based report 204. In this example, the CVA-based report 210 may include a case summary, owner identification, threat analysis, surveillance review, remediation recommendations, and follow up actions. After the report is generated, the report may be provided to a user 206. For example, the client device 102 may transmit the report to a handheld device in the user's 206 possession, or the user 206 may access the report 210 at the client device 102.

In certain aspects, the object detection component 115 may be configured to automatically perform one or more actions based on information provided in one or more of the CVA-based report 204. For example, one or more of the CVA model 117 or the LLM AI model 119 may detect a pattern in information collected from the image data 302. In another example, the object detection component 115 may automatically notify an airport security team of a piece of abandoned luggage that they need to investigate based on, for instance, facial recognition, abandoned object detection, object and person detection, pixelation, depth, and geolocation information. In some aspects, for instance, facial recognition may correspond to two-dimensional, three-dimensional, geometric, and/or holistic recognition method.

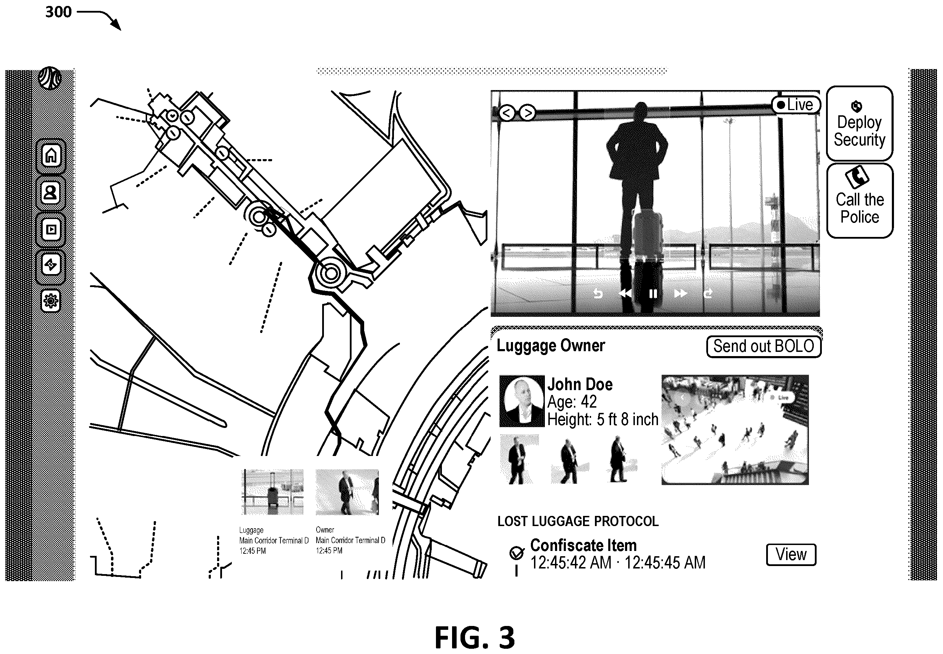

**FIG. 3** is a diagram illustrating techniques for abandoned object detection, and more specifically, an object detection interface 300. The abandoned bag detection system obtains image and/or video data in a geographic area such as an airport for real-time viewing by a security operator. The security operator may be presented with various forms of information, such as an identified bag or luggage and an associated owner of the bag or luggage. For example, the object detection component 115 may identify bags throughout an airport, and determine whether any of the bags are unattended for a period of time, thereby triggering an abandonment inference or alert. The object detection component 115 may also determine and provide information on the identified owner of the bag, such as height, weight, and age. The object detection component 115 may either selectively by user input or automatically based on a bag abandonment time duration, notify security personnel such as police. The object detection component 115 may also indicate a lost or abandoned bag or luggage protocol whereby the security operator may be presented action items to resolve the potential security issue.

The object detection interface 300 provide an example implementation of the abandoned bag detection system, particularly within an airport environment. The figure visually represents the real-time operational workflow and user interface elements that facilitate the detection, identification, and management of abandoned luggage incidents. At the center of the interface may be a live video feed sourced from one or more surveillance cameras positioned throughout the monitored area, such as an airport terminal. This live feed may enable the security operator to observe real-time activity and visually confirm the presence and status of objects, such as bags or luggage, within the field of view. Superimposed on the video feed may be graphical overlays, such as bounding boxes, colored outlines, or icons, which highlight detected bags or luggage and visually distinguish them from the background and other non-relevant items.

Adjacent to the video feed, the interface may display an owner identification panel that provides detailed information about the person associated with the detected bag, as determined by the object detection component. This information may include the owner's name, age, height, and additional biometric or demographic data, such as gender or clothing description. The owner identification may be generated using AI-based facial recognition and may be cross-referenced with travel records or other available databases to ensure accuracy.

The interface may also present a set of actionable buttons or selectable options that allow the security operator to initiate specific protocols or responses. These options may include commands such as "Live Call the Police" to instantly contact law enforcement or airport security, "Deploy Security" to dispatch on-site personnel to the location of the abandoned bag, "Send out BOLO" (Be On the Lookout) to issue a broadcast alert to other security staff regarding the identified owner or bag, "Confiscate Item" to initiate a protocol for the removal and secure handling of the abandoned item, and "View LOST LUGGAGE PROTOCOL" to access a step-by-step procedure for managing lost or abandoned luggage in compliance with airport security policies.

Additionally, the interface may include a timeline or log section that records key events and actions taken in relation to the detected bag. Timestamps, such as "12:45:42 AM · 12:45:45 AM," indicate the precise period during which the bag was identified as unattended, supporting auditability and incident reconstruction. Visual indicators, such as color-coded icons or banners, denote the current status of the bag, for example, "Unattended," "Under Investigation," or "Confiscated." Alerts may be automatically generated when a bag exceeds the abandonment threshold time, prompting the operator to take further action.

The interface may also present confirmation dialogs or prompts when the operator selects certain actions, such as confirming the decision to confiscate an item or to notify police, thereby reducing the risk of accidental activation and ensuring a deliberate response. The interface may be integrated with backend components, including the object detection component, computer vision analytics (CVA) model, and large language model (LLM), which collectively process image data, perform object and owner identification, and generate context-aware recommendations or reports. The system may display AI-generated recommendations or contextual information based on the current scenario, such as suggested remediation steps, risk assessments, or links to relevant security protocols. Furthermore, the interface may provide fields for the security operator to enter notes, observations, or incident details, which are then incorporated into the case file or report generated for the event.

The workflow may involve the system continuously monitoring video feeds for bags or luggage. Upon detection of an unattended bag, the system overlays identification markers and retrieves owner information. The operator may then be presented with actionable options and protocol guidance, and all actions and events are timestamped and logged for record-keeping. The interface may support both automated and manual escalation to security personnel, ensuring a rapid and compliant response to potential security threats.

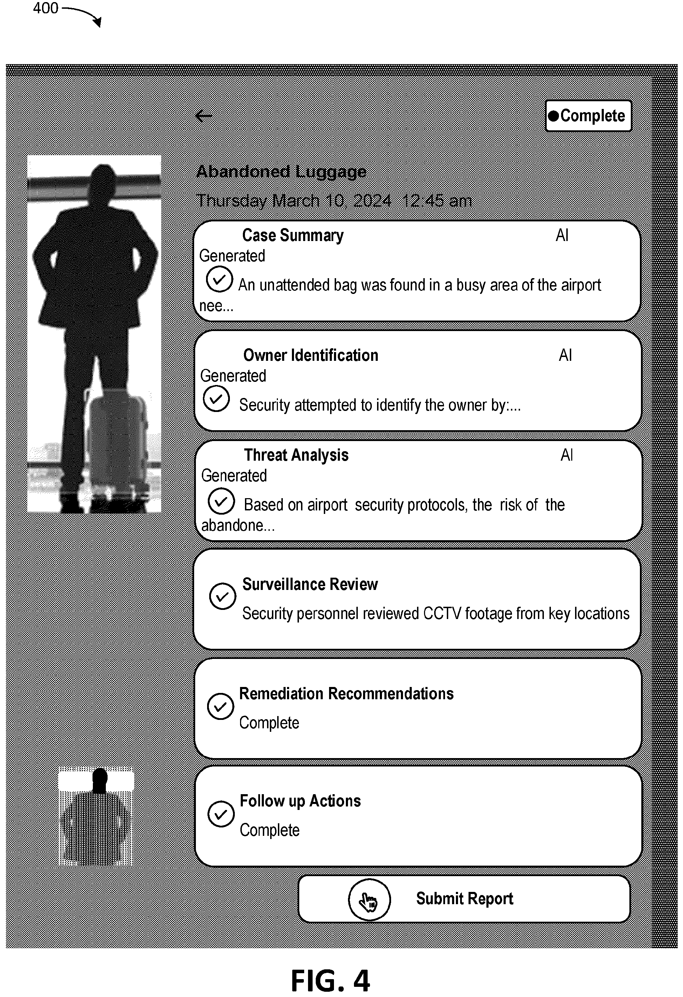

**FIG. 4** is a block diagram illustrating an example case report 400 for an abandoned bag. The case report may be associated with an abandoned bag of luggage at a travel logistics center such as an airport. The case report may include a case summary, owner identification, threat analysis, surveillance review, remediation recommendations, and follow up actions.

The example case report 400 may be generated by the abandoned bag detection system in response to the identification of an abandoned bag of luggage at a travel logistics center, such as an airport. The case report 400 may provide an actionable summary of the incident, consolidating all relevant information and analysis to facilitate efficient resolution and compliance with security protocols.

At the top of the case report 400, a header or title section may be presented, typically indicating the nature of the report (e.g., "Abandoned Luggage") and including a timestamp or date and time of the incident (for example, "Thursday March 10, 2024 12:45 am"). This may allow for clear identification and chronological organization of reports.

The first major section of the case report is the "Case Summary." This section may provide an AI-generated narrative or concise description of the incident, such as "An unattended bag was found in a busy area of the airport." The summary is intended to quickly inform security personnel or investigators of the essential facts and context surrounding the event.

Following the case summary is the "Owner Identification" section. This area details the steps taken by security personnel or the AI system to identify the owner of the abandoned bag. The report may specify the methods used, such as facial recognition, review of travel records, or analysis of surveillance footage. The owner's information, if successfully identified, is included here, such as name, age, height, and any other relevant demographic or biometric data. If the owner could not be identified, the report may note the unsuccessful attempts or ongoing efforts.

The "Threat Analysis" section is also prominently featured in the case report. This portion contains an AI-generated or operator-completed assessment of the potential risk posed by the abandoned bag, referencing applicable airport security protocols. The analysis may consider factors such as the location of the bag, the duration it was left unattended, the behavior of the associated individual, and any other contextual information that could influence the perceived threat level. The report may include a risk rating or recommendation for further action based on this analysis.

Next, the "Surveillance Review" section documents the review of CCTV or other surveillance footage related to the incident. This section typically indicates whether security personnel have completed their review, the key locations or camera angles examined, and any notable observations or findings. The completion status of this review is often marked as "Complete" or "In Progress" to provide a clear record of investigative steps taken.

The "Remediation Recommendations" section provides AI-generated or operator-suggested actions to address the incident. These recommendations may include steps such as confiscating the item, deploying security personnel, notifying law enforcement, or following specific lost luggage protocols. The recommendations are tailored to the specifics of the incident and are intended to guide the security operator toward appropriate and compliant resolution.

The "Follow up Actions" section records any additional steps taken or required after the initial response, such as submitting the report, contacting the owner if identified, or monitoring the area for further suspicious activity. This section ensures that all necessary post-incident procedures are documented and tracked.

At the bottom of the case report, there may be a "Submit Report" or "Complete" button or indicator, signifying that the report has been finalized and entered into the system for record-keeping and further review.

Some implementations provides an AI-based left and removed Object Detection system for real-time threat and theft prevention. Specifically, in high-security, retail, transportation, and public venue environments, unattended objects may pose safety threats, while missing objects can indicate theft or tampering. Manual monitoring may be reactive and often delayed, limiting the ability to respond quickly to such incidents. As such, the present implementations further provides an AI-powered video analytics system that continuously monitors scenes for static object changes, detecting when items are left unattended or removed. The system triggers real-time alerts, logs events with object metadata and evidence snapshots, and supports false positive suppression. Dashboards visualize incident trends, zone risks, and response metrics. Historical data enables compliance reporting, security audits, and proactive surveillance adjustments, enhancing situational awareness and operational safety.

Further, in some implementations, the system may detect when an object is left unattended in a scene (e.g., bag, package, suitcase) or when a previously present object (e.g., artwork, equipment) is removed. This helps identify potential threats or thefts in real time, especially in high-security, retail, transportation, and public venue environments.

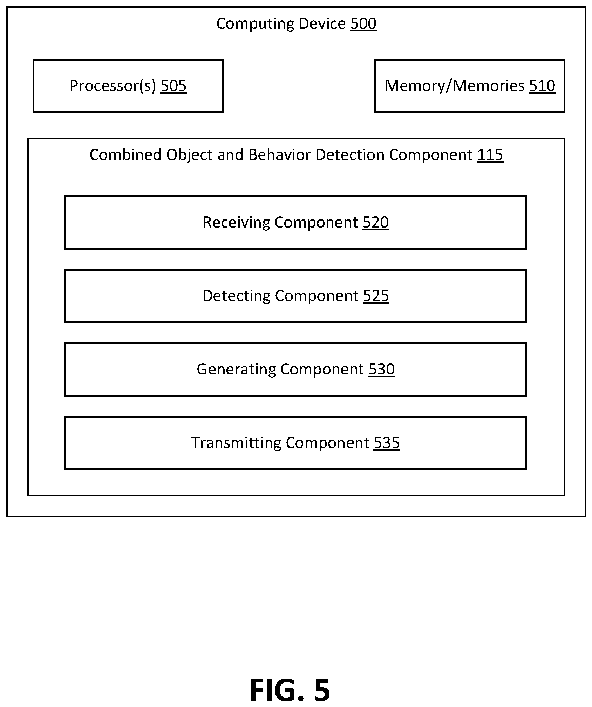

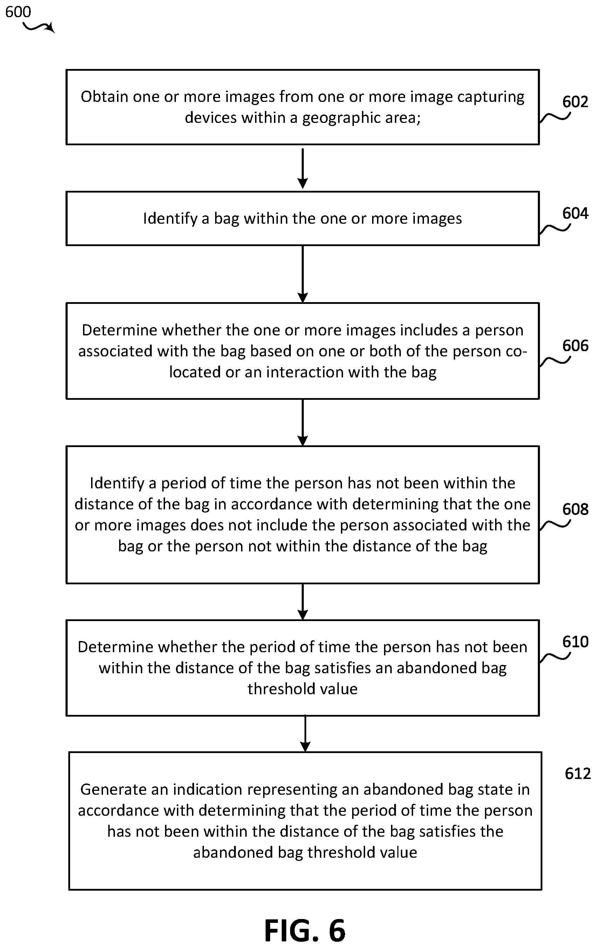

Referring to **FIG. 5** **and** **FIG. 6****,** in operation, computing device 500 may perform a method 600 of reporting information collected from image data, such as via execution of combined object detection component 115 by one or more processors 505 configured, individually or in any combination, to execute instructions to perform the following actions, and/or configured to communicate with one or more memories 510 to obtain the instructions for performing the following actions. In some examples, the computing device 500 may include the client device 102 or the remote server 112 of FIG. 1. The computing device 500 may be the same as or similar to client device 102 and/or remote server 112 described above. Additionally, the receiving component 520 and transmitting component 535 of the computing device 500 may be the same as the communication system 106 of client device 102 and/or remote server 112 as described above. Also, the detecting component 525 of the computing device 400 may be the same as or similar to the object detection module 104 of client device 102 and/or remote server 112 as described above. Further, the generating component 530 of the computing device 500 may be the same as or similar to the object detection module 104 and/or the report generation module 105 of client device 102 and/or remote server 112 as described above.

At block 502, the method 500 includes obtaining one or more images from one or more image capturing devices within a geographic area. For example, in an aspect, computing device 400, one or more processors 405, one or more memories 410, combined object detection component 115, and/or receiving component 420 may be configured to or may comprise means for obtaining one or more images from one or more image capturing devices within a geographic area.

For example, the receiving at block 502 may include a wired and/or wireless interface between the computing device 400 and one or more surveillance cameras (e.g., cameras 110 of FIG. 1). Each camera may capture image data (e.g., video and/or images) of a corresponding zone of an area and provide the image data (e.g., image data 302, illustrated in FIG. 3) to the computing device 400 via the wired and/or wireless interface. Further, for example, the receiving at block 502 may be performed so that the computing device 400, via object detection/recognition, may generate textual/tabular/graphic data based on objects and/or actions detected in the image data.

At block 504, the method 500 includes identifying a bag within the one or more images. For example, in an aspect, computing device 400, one or more processors 405, one or more memories 410, object detection component 115, and/or detecting component 425 may be configured to or may comprise means for identifying a bag within the one or more images.

For example, the identification at block 504 may be performed by an object detection module (e.g., object detection module 104 of FIGs. 1 and 3) that includes computer-vision and/or object detection/recognition software configured to detect and classify objects (e.g., bags) in image data received from the surveillance cameras. Further, for example, the identifying at block 504 may be performed to transform the content of the image data into textual, tabular, or visual data that can be understood by a user. In some examples, the detecting at block 504 may be performed by a computer-vision AI model.

At block 506, the method 500 includes determining whether the one or more images includes a person associated with the bag and within a distance of the bag. For example, in an aspect, computing device 400, one or more processors 405, one or more memories 410, object detection component 115, and/or determining whether the one or more images includes a person associated with the bag and within a distance of the bag.

At block 508, the method 500 includes identifying a period of time the person has not been within the distance of the bag in accordance with determining that the one or more images does not include the person associated with the bag or the person not within the distance of the bag. For example, in an aspect, computing device 400, one or more processors 405, one or more memories 410, object detection component 115, and/or generating component 430 may be configured to or may comprise means for identifying a period of time the person has not been within the distance of the bag in accordance with determining that the one or more images does not include the person associated with the bag or the person not within the distance of the bag.

At block 510, the method 500 includes determining whether the period of time the person has not been within the distance of the bag satisfies an abandoned bag threshold value. For example, in an aspect, computing device 400, one or more processors 405, one or more memories 410, combined object and behavior detection component 115, and/or transmitting component 435 may be configured to or may comprise means for determining whether the period of time the person has not been within the distance of the bag satisfies an abandoned bag threshold value.

At block 510, the method 500 includes generating an indication representing an abandoned bag state in accordance with determining that the period of time the person has not been within the distance of the bag satisfies the abandoned bag threshold value. For example, in an aspect, computing device 400, one or more processors 405, one or more memories 410, combined object and behavior detection component 115, and/or transmitting component 435 may be configured to or may comprise means for generating an indication representing an abandoned bag state in accordance with determining that the period of time the person has not been within the distance of the bag satisfies the abandoned bag threshold value.

For example, the report generation module may generate the indication corresponding to a report, and the transmitting at block, via one or more of a wired and/or wireless link (e.g., WiFi, Bluetooth, etc.) to a user device (e.g., a cell phone, smart phone, tablet, personal computer, etc.). The user may then use the information presented by the report to manage security at the location, i.e., airport.

While the foregoing disclosure discusses illustrative aspects and/or embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

Implementation examples are described in the following numbered clauses:
Clause 1. A method of bag identification, comprising:
   obtaining one or more images from one or more image capturing devices within a geographic area;
   identifying a bag within the one or more images;
   determining whether the one or more images includes a person associated with the bag and within a distance of the bag;
   in accordance with determining that the one or more images does not include the person associated with the bag or the person not within the distance of the bag, identifying a period of time the person has not been within the distance of the bag;
   determining whether the period of time the person has not been within the distance of the bag satisfies an abandoned bag threshold value; and
   in accordance with determining that the period of time the person has not been within the distance of the bag satisfies the abandoned bag threshold value, generating an indication representing an abandoned bag state.
Clause 2. The method of clause 1, wherein the indication corresponds to at least one of:
   an instruction to confiscate the bag,
   an alert to contact security personnel, or
   a real-time video of one or both of the bag and the person.
Clause 3. The method of any of clauses 1 to 2, further comprising generating a case file for the person including an association to the bag.
Clause 4. The method of any of clauses 1 to 3, wherein the person associated with the bag is identified based at least on facial recognition.
Clause 5. The method of any of clauses 1 to 4, wherein the bag is identified based on object detection.
Clause 6. The method of any of clauses 1 to 5, wherein determining whether the one or more images includes the person within the distance of the bag is based on geolocation.
Clause 7. The method of any of clauses 1 to 6, wherein the one or more images correspond to a video stream.
Clause 8. The method of any of clauses 1 to 7, wherein the abandoned bag threshold value represents an abandoned bag time value that triggers generation of the indication.
Clause 9: An apparatus, comprising means for performing a method in accordance with any one of clauses 1 to 8.
Clause 10: A non-transitory computer-readable medium comprising executable instructions that, when executed by one or more processors of an apparatus, cause the apparatus to perform a method in accordance with any one of clauses 1 to 8.
Clause 11: A computer program product embodied on a computer-readable storage medium comprising code for performing a method in accordance with any one of clauses 1 to 8.

As used herein, a processor, at least one processor, and/or one or more processors, individually or in combination, configured to perform or operable for performing a plurality of actions is meant to include at least two different processors able to perform different, overlapping or non-overlapping subsets of the plurality actions, or a single processor able to perform all of the plurality of actions. In one non-limiting example of multiple processors being able to perform different ones of the plurality of actions in combination, a description of a processor, at least one processor, and/or one or more processors configured or operable to perform actions X, Y, and Z may include at least a first processor configured or operable to perform a first subset of X, Y, and Z (e.g., to perform X) and at least a second processor configured or operable to perform a second subset of X, Y, and Z (e.g., to perform Y and Z). Alternatively, a first processor, a second processor, and a third processor may be respectively configured or operable to perform a respective one of actions X, Y, and Z. It should be understood that any combination of one or more processors each may be configured or operable to perform any one or any combination of a plurality of actions.

As used herein, a memory, at least one memory, and/or one or more memories, individually or in combination, configured to store or having stored thereon instructions executable by one or more processors for performing a plurality of actions is meant to include at least two different memories able to store different, overlapping or non-overlapping subsets of the instructions for performing different, overlapping or non-overlapping subsets of the plurality actions, or a single memory able to store the instructions for performing all of the plurality of actions. In one non-limiting example of one or more memories, individually or in combination, being able to store different subsets of the instructions for performing different ones of the plurality of actions, a description of a memory, at least one memory, and/or one or more memories configured or operable to store or having stored thereon instructions for performing actions X, Y, and Z may include at least a first memory configured or operable to store or having stored thereon a first subset of instructions for performing a first subset of X, Y, and Z (e.g., instructions to perform X) and at least a second memory configured or operable to store or having stored thereon a second subset of instructions for performing a second subset of X, Y, and Z (e.g., instructions to perform Y and Z). Alternatively, a first memory, and second memory, and a third memory may be respectively configured to store or have stored thereon a respective one of a first subset of instructions for performing X, a second subset of instruction for performing Y, and a third subset of instructions for performing Z. It should be understood that any combination of one or more memories each may be configured or operable to store or have stored thereon any one or any combination of instructions executable by one or more processors to perform any one or any combination of a plurality of actions. Moreover, one or more processors may each be coupled to at least one of the one or more memories and configured or operable to execute the instructions to perform the plurality of actions. For instance, in the above non-limiting example of the different subset of instructions for performing actions X, Y, and Z, a first processor may be coupled to a first memory storing instructions for performing action X, and at least a second processor may be coupled to at least a second memory storing instructions for performing actions Y and Z, and the first processor and the second processor may, in combination, execute the respective subset of instructions to accomplish performing actions X, Y, and Z. Alternatively, three processors may access one of three different memories each storing one of instructions for performing X, Y, or Z, and the three processor may in combination execute the respective subset of instruction to accomplish performing actions X, Y, and Z. Alternatively, a single processor may execute the instructions stored on a single memory, or distributed across multiple memories, to accomplish performing actions X, Y, and Z.

It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Terms such as "if," "when," and "while" should be interpreted to mean "under the condition that" rather than imply an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

## Claims

1. A method of bag identification, comprising:
obtaining one or more of images from one or more image capturing devices within a geographic area;
identifying a bag within the one or more of images;
determining whether the one or more of images includes a person associated with the bag based on one or both of the person co-located or an interaction with the bag;
in accordance with determining that the one or more of images does not include the person associated with the bag or the person not within the distance of the bag, identifying a period of time the person has not been within the distance of the bag;
determining whether the period of time the person has not been within the distance of the bag satisfies an abandoned bag threshold value; and
in accordance with determining that the period of time the person has not been within the distance of the bag satisfies the abandoned bag threshold value, generating an indication representing an abandoned bag state.

2. The method of claim 1, wherein the indication corresponds to at least one of:
an instruction to confiscate the bag,
an alert to contact security personnel, or
a real-time video of one or both of the bag and the person.

3. The method of claim 1 or 2, further comprising generating a case file for the person including an association to the bag.

4. The method of any of the preceding claims, wherein the person associated with the bag is identified based at least on facial recognition.

5. The method of any of the preceding claims, wherein the bag is identified based on object detection.

6. The method of any of the preceding claims, wherein determining whether the plurality of images includes the person within the distance of the bag is based on at least one of pixelation, depth, or geolocation.

7. The method of any of the preceding claims, wherein the one or more of images correspond to a video stream.

8. The method of any of the preceding claims, wherein the abandoned bag threshold value represents an abandoned bag time value that triggers generation of the indication.

9. An apparatus for combined object detection, comprising:
one or more memories;
one or more association engines configured to associate one or more persons with one or more bags; and
one or more processors coupled with the one or more memories and the one or more association engines, the one or more processors, individually or in combination, are configured to:
perform a method according to any of claims 1 to 8
or
are configured to:
obtain one or more images from one or more image capturing devices within a geographic area;
identify a bag within the plurality of images;
determine whether the one or more images includes a person associated with the bag based on one or both of the person co-located or interacted with the bag;
identify a period of time the person has not been within the distance of the bag in accordance with a determination that the one or more images does not include the person associated with the bag or the person not within the distance of the bag;
determine whether the period of time the person has not been within the distance of the bag satisfies an abandoned bag threshold value; and
generate an indication representing an abandoned bag state in accordance with a determination that the period of time the person has not been within the distance of the bag satisfies the abandoned bag threshold value.

10. The apparatus of claim 9, wherein the indication corresponds to at least one of:
an instruction to confiscate the bag,
an alert to contact security personnel, or
a real-time video of one or both of the bag and the person.

11. The apparatus of claim 9 or 10, further comprising generating a case file for the person including an association to the bag.

12. The apparatus of claim 9 to 11, wherein the person associated with the bag is identified based at least on facial recognition.

13. The apparatus of claim 9 to 12, wherein the bag is identified based on object detection, and wherein the one or more images correspond to a video stream.

14. The apparatus of claim 9 to 13, wherein determining whether the plurality of images includes the person within the distance of the bag is based on geolocation, and wherein the abandoned bag threshold value represents an abandoned bag time value that triggers generation of the indication.

15. An apparatus for combined object detection, in particular according to any of claims 9 to 14, comprising:
means for obtaining one or more images from one or more image capturing devices within a geographic area;
means for identifying a bag within the one or more images;
means for determining whether the one or more images includes a person associated with the bag based on one or both of the person co-located or interacted with the bag;
means for identifying a period of time the person has not been within the distance of the bag in accordance with determining that the one or more images does not include the person associated with the bag or the person not within the distance of the bag;
means for determining whether the period of time the person has not been within the distance of the bag satisfies an abandoned bag threshold value; and
means for generating an indication representing an abandoned bag state in accordance with determining that the period of time the person has not been within the distance of the bag satisfies the abandoned bag threshold value.
